(19) Europäisches Patentamt
European Patent Office
Office européen des brevets

(11) **EP 1 816 533 A2**

(12) **EUROPEAN PATENT APPLICATION**

(43) Date of publication:
**08.08.2007 Bulletin 2007/32**

(51) Int Cl.:
***G05B 19/18*** *(2006.01)*

(21) Application number: **07001872.6**

(22) Date of filing: **29.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **02.02.2006 JP 2006026107**

(71) Applicant: **FANUC LTD**
**Minamitsuru-gun,**
**Yamanashi 401-0597 (JP)**

(72) Inventors:
• **Ando, Minoru, c/o Room6-207**
**Minamitsuru-g, Yamanashi 401-0511 (JP)**
• **Suzuki, Kazuhiro,c/o Room12-602**
**Minamitsuru-g, Yamanashi 401-0511 (JP)**
• **Tokito, Hiroaki,c/o Room12-406**
**Minamitsuru-g, Yamanashi 401-0511 (JP)**

(74) Representative: **Thum, Bernhard**
**Wuesthoff & Wuesthoff**
**Patent- und Rechtsanwälte**
**Schweigerstrasse 2**
**81541 München (DE)**

(54) **Laser control method and laser control apparatus**

(57)     A laser control method for controlling a laser beam irradiated, onto a target object (21) to be processed, during execution of a laser processing program, the method including: providing a processing condition table describing a plurality of different feed velocities, in association with a processing condition of the laser beam corresponding to individual feed velocities; detecting an actual feed velocity of the laser beam that is relative processing velocity of the laser beam relative to the target object while a processing is performed along a processing path instructed by the laser processing program; and determining the processing condition of the laser beam corresponding to the actual feed velocity based on the processing condition table.

Fig.2

EP 1 816 533 A2

**Description**

Cross Reference to Related Application

The present application claims priority of Japanese Patent Application No. 2006-026107 filed on February 2, 2006, the disclosure of which is incorporated, by reference, in its entirety.

Background of the Invention

1. Field of the Invention

The present invention relates to a laser control method and a laser control apparatus for controlling the processing condition of a laser beam irradiated, onto a target object to be processed, during the execution of a processing program.

2. Related Art

In laser processing, a processing program executed by a numerical control apparatus (hereinafter referred to as CNC) is generally used to instruct relative processing feed velocity, the feed velocity at stationary state, of a laser beam, and a target object to be processed is processed under the processing condition of the laser beam corresponding to the instructed feed velocity. In other words, in laser processing, the processing is generally performed without taking due regard to the lowering of the feed velocity of the laser beam at the time of acceleration or deceleration of the laser beam feeding (including the time of initiation of the processing or termination of the processing). Therefore, in the path portion of the laser beam where actual feed velocity of the laser beam is lower than the feed velocity instructed by the processing program in advance, for example in the path portion of accelerated or decelerated feed velocity, or in the path portion where a straight path is changed to a curved path, an excessively large energy is applied to the path portion, which may lead to an occurrence of a defect in a processed cut surface, melting, or the like.

There is also a problem that, in a curved path portion, for example a corner portion of a corner section having a small corner angle, actual feed velocity would become lower than the instructed feed velocity due to decrease of feed velocity of a laser beam which begins before reaching the corner section so that excessively large energy may be applied to the corner section at the time of passage of the corner section, leading to the occurrence of a defect in a processed cut surface, melting, or the like.

One method for resolving above problem that arises when actual feed velocity of the laser beam becomes lower than the instructed feed velocity of the processing program, is to prepare a processing program in which path portions of accelerated and decelerated feed velocity, straight path portions, and curved path portions are all comprehensively identified, and the processing condition of the laser beam corresponding to respective path portions are individually set so as to avoid the above problems. In this method, however, there is a problem that the processing program itself would become too complicated, and would be unable to respond to a change of processing path in a flexible manner and thus the operability of the system would become low.

As another example of laser processing method, one disclosed in Japanese Patent Publication No. 06-47571 (JP-A-6-47571) is known. The laser processing method disclosed in this Patent Reference comprises, as the codes to be used in the processing program, a first code for altering the power of the laser beam and a second code for canceling the alteration of the power that has been instructed by the first code. For example, the altered power of laser beam may be determined by calculating the difference between the instructed high power and the instructed low power of laser beam, multiplying the difference by the ratio of the actual feed velocity to the highest feed velocity of laser beam and then adding the obtained value to the instructed low power of laser beam.

In this laser processing method, however, the power of laser beam is determined under the premise that there is a fixed proportionality in the relation between the feed velocity and the power of laser beam over wide range of the feed velocity. Therefore, there is a problem that, when an accurate power of laser beam is required for every path portion of the laser beam, an optimal processing condition cannot be achieved, and it is difficult to improve the quality of processing.

As an example of a laser processing method for processing a corner section as a curved path portion, the method shown below is known. In this method, while a laser cutting operation is being performed in accordance with the conditions of feed velocity and power of laser beam instructed in advance by a processing program, if a corner section having a corner angle not greater than a "preset angle" is detected by CNC during operation of the processing program, then a processing program is automatically executed such that a) movement of laser beam is stopped at the vertex of the corner section, b) a piercing operation is performed at the stop position, and c) after completion of piercing, in passing to cutting operation, processing is performed under a specified conditions of power and feed velocity of laser beam for a predetermined distance. This is an exemplary method of laser processing which provides an improved cut surface and permits improved quality of processing to be achieved near the vertex of the corner section.

In this processing method, however, when the corner angle of the corner section is not greater than a "preset angle", laser processing is performed under the same processing condition irrespective of the magnitude of the corner angle. For example, when the "preset angle" is set to 90°, same processing condition is selected for the corner angle of 30° and the corner angle of 90°, so that the processing condition may be inappropriate to achieve good processing quality.

Summary of the Invention

In view of above problem, it is an object of the present invention to provide a laser control method and a laser control apparatus which is capable of improving the reliability of laser processing quality by altering the processing condition of laser beam to an optimal condition in the processing path of laser beam where feed velocity (processing velocity) of the laser beam becomes low.

In order to attain above object, in accordance with the present invention, there is provided a laser control method for controlling a laser beam irradiated, onto a target object to be processed, during execution of a laser processing program, the method comprising:

> providing a processing condition table describing a plurality of different feed velocities, in association with a processing condition of the laser beam corresponding to individual feed velocities; detecting an actual feed velocity of the laser beam that is relative processing velocity of the laser beam relative to the target object (21) while processing is performed along a processing path instructed by the laser processing program; and determining the processing condition of the laser beam corresponding to the actual feed velocity based on the processing condition table.

In accordance with the present invention, there is also provided a laser control apparatus for controlling laser beam irradiated, into a target object to be processed, during execution of a laser processing program, the apparatus comprising: a processing condition storage section that stores previously a first processing condition table describing a plurality of different feed velocities, in association with a processing condition of the laser beam corresponding to individual feed velocities; a velocity detecting section for detecting an actual feed velocity which is relative processing velocity of the laser beam relative to the target object while a processing is performed along a processing path instructed by the laser processing program; and a processing condition calculating section that determines the processing condition of the laser beam corresponding to the actual feed velocity detected by the velocity detecting section based on the first processing condition table.

In accordance with the present invention, it is possible, by detecting an actual feed velocity, that is, a relative processing velocity of a laser beam relative to the target object to be processed, to identify the path portion of laser beam, such as accelerated or decelerated path portion, curved path portion, and the like, where the feed velocity of the laser beam is lowered. Then, by using a processing condition table which describes a plurality of different feed velocities in association with different processing conditions of laser beam corresponding to individual feed velocities, it is possible to determine the processing condition of the laser beam corresponding to the actual feed velocity, to thereby change the processing condition of laser beam to an optimal condition in a path portion where feed velocity (processing velocity) of the laser beam is lowered. In this manner, the problem of defect of cut surface or melting can be avoided, and reliability of the processing quality can be improved.

Also, the laser control apparatus in accordance with the present invention can further comprise a corner angle calculating section which automatically detects a corner section included in the processing path and calculates a corner angle of the corner section, wherein the processing condition storage section stores further previously a second processing condition table describing a plurality of different corner angles in association with the processing condition of the laser beam corresponding to individual corner angles ; and the processing condition calculating section determines the processing condition of the laser beam corresponding to the corner angle calculated by the corner angle calculating section based on the second processing condition table.

In accordance with the invention, the processing condition of laser beam corresponding to the corner angle can be obtained for a corner section, so that laser processing can be performed under the condition such that no excessive energy is applied to the relevant corner section and melting can be reliably prevented.

In accordance with the present invention, there is also provided a laser control apparatus for controlling laser beam irradiated, onto a target object to be processed, during execution of a laser processing program, the apparatus comprising: a processing condition storage section that stores previously a processing condition table describing a plurality of different corner angles, in association with a processing condition of the laser beam corresponding to individual corner angles; a corner angle calculating section which, while a processing is performed along a processing path instructed by the laser processing program, automatically detects a corner section included in the processing path and calculates a corner angle of the corner section; and a processing condition calculating section that determines the processing condition of the laser beam corresponding to the corner angle calculated by the corner angle calculating section based on the processing condition table.

In accordance with the invention, by automatically detecting a corner section included in the processing path and calculating the corner angle of the corner section, a curved path portion where feed velocity is lowered can be identified. Then, by determining the processing condition of laser beam corresponding to the corner angle from the processing condition storage section which stores a processing condition table describing a plurality of different corner angles in association with the processing conditions of laser beam respectively corresponding to the corner angles, the processing condition of the laser beam in the path portion where the feed velocity of the laser beam is lowered can be changed to an optimal condition, so that the problem of possible occurrence of defective cut surface and melting etc. can be avoided, and the reliability of the processing quality can be improved.

Further, the laser control apparatus may comprise a signal output section for outputting a registered number of the processing condition of the laser beam determined by the processing condition calculating section as an external signal.

In accordance with the invention, the processing condition of the laser beam can be used for repeated processing of corner sections of an acute angle. By outputting the number information relating to the processing condition selected at the corner section, a retrial function for performing repeated cutting operation at the corner section may come into use. Therefore, processing quality of the target corner section can be improved.

Brief Description of the Drawing

Above and other objects, features and advantages of the present invention will become more apparent from the following description of preferred embodiments with reference to appended drawings, in which:

Fig. 1 is a block diagram useful for explaining the component construction of a laser control apparatus according to the present embodiment;
Fig. 2 is a block diagram useful for explaining the function of the same laser control apparatus;
Fig. 3 is a flow chart useful for explaining the determination of a laser power corresponding to the detected actual feed velocity (by means of feed velocity control);
Fig. 4 is a flow chart useful for explaining the determination of a processing condition corresponding to the corner angle (by means of corner angle control).

Detailed Description

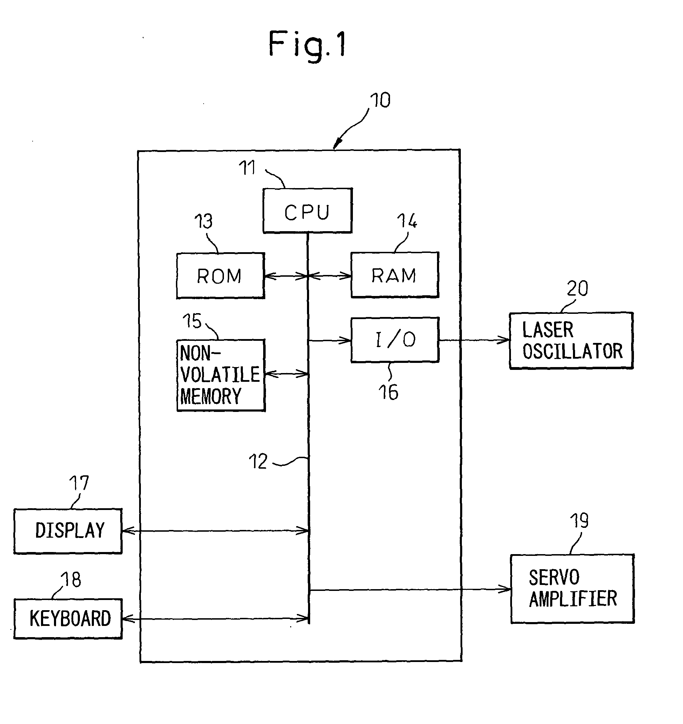

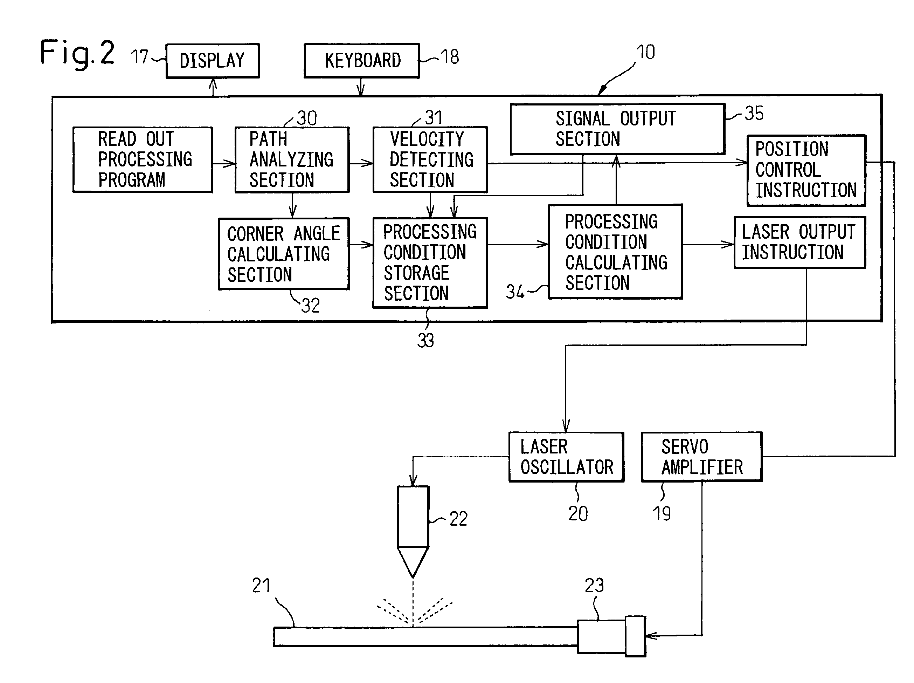

The present invention will be described below with reference to drawings showing a laser control method and a laser control apparatus according to the present invention. Fig. 1 shows a block diagram useful for explaining the component construction of a laser control apparatus according to the present embodiment, and Fig. 2 shows a block diagram useful for explaining the function of the same laser control apparatus.

As shown in Fig. 1, a laser control apparatus (CNC) 10 used for controlling a laser processing machine has a processor (CPU) 11, various memories 13, 14, 15 interconnected via a bus 12 to the processor 11, and an IO interface 16. To the laser control apparatus 10, there are interconnected, via signal lines, a display 17 that uses CRT or liquid crystal to display the position and velocity of the machine, a processing condition such as a laser power, a keyboard 18 used for inputting the instructed value to the laser processing machine, various data and parameters, a servo amplifier 19 that receives the instruction from CPU 11 and operates the processing feed axes (X-, Y-, Z-axis) via a servo motor 23, and a laser oscillator 20 for generating a laser beam of specified processing condition to a target object to be processed 24.

Various memories include ROM 13, RAM 14, and a nonvolatile memory 15. In ROM 13, a system program for controlling laser processing machine is stored, and in RAM 14, data used or generated during execution of various processing are temporarily stored. In the nonvolatile memory 15, a processing program is stored, and a processing condition storage region is formed. The processing condition storage region is a region in which a processing condition table describing of a plurality of different feed velocities in association with different processing condition of the laser beam respectively corresponding to individual feed velocities, and/or a plurality of different corner angles in association with different processing condition corresponding to the corner angles, is stored. The processing condition related to feed velocities and/or corner angles include laser power, frequency, and duty ratio, etc. In the present embodiment, from among processing condition, only laser power is explained below. Although an explanation is omitted, other processing condition can also be controlled by the laser control apparatus 10 of the present embodiment in the same manner.

To the IO interface 16, a laser oscillator 20 is connected, and power control signal from the processor 11 is transmitted via the IO interface 16 to the laser oscillator 20. The laser oscillator 20 irradiates a laser beam in accordance with the power control signal. The laser beam is reflected by a bending mirror (not shown) toward a processing head, and is converged by the processing head and irradiated from a tip of a processing nozzle 22 mounted to the processing head to a target object 21 to be processed.

As can be seen from a block diagram of Fig. 2 showing the function of the laser control apparatus 10, the laser control apparatus 10 has means 30 that analyzes the instruction of processing path, a velocity detecting section 31 that detects an actual feed velocity, that is, relative processing velocity of the laser beam relative to the target object 21 to be processed 21 in a straight path portion, a corner angle calculating section 32 that automatically detects a corner section included in a curved path portion and calculates (detects) a corner angle, a processing condition calculating section 34 that determines the laser power corresponding to the actual velocity detected by the velocity detecting section 31 and the laser power corresponding to the corner angle detected by the corner angle calculating section 32 based on the processing condition table in the processing condition storage region 33, and a signal output section 35 for repeated processing of corner sections.

In the velocity detecting section 31, the actual feed velocity of laser beam is detected from feedback signal from a pulse coder, a motor control instruction from CPU 11, and the like. In the corner angle calculating section 32, a corner angle is detected or calculated from a corner section formed by two processing paths.

In the processing condition storage region 33, within the range stored in advance in data storage region of CNC 10 between the instructed value of the highest processing feed velocity of laser beam and the instructed value of the lowest processing feed velocity for processing a portion for which high precision in shape is needed, a processing condition table corresponding to feed velocities in association with the optimal laser power for the processing feed velocity over multiple stages (for example, five stages) of processing feed velocities, and a processing condition table corresponding to corner angles in association with the optimal laser power for the corner angle over multiple stages (for example, five stages) of corner angles, for example, from an acute angle to an obtuse angle at corner section, are registered, integrally.

The processing condition storage region 33 may be constructed in divisions from a processing condition storage region corresponding to the feed velocity and a processing condition storage region corresponding to the corner angle. Also, the processing condition table stored in the processing condition storage region may be composed in divisions from a processing condition table corresponding to the feed velocity and a processing condition table corresponding to the corner angle.

In the processing condition calculating section 34, an optimal laser power corresponding to the actual feed velocity or the corner angle is selected or calculated. In determining an optimal laser power corresponding to the actual feed velocity, if the actual feed velocity detected by CNC 10 coincides with one of the feed velocities preset stepwise in the processing condition storage region 33, the preset laser power corresponding to the feed velocity is selected. If the actual feed velocity is included within the range between the feed velocity of n-th processing condition and the feed velocity of (n+1)-th processing condition among the preset processing conditions, a proportionality calculation is performed using the preset feed velocity and the actual laser power so as to control the laser power in an optimal manner in accordance with the actual feed velocity.

For example, if the detected actual feed velocity is F, and it is defined that, in the processing condition 1 registered in the storage region in CNC 10, the feed velocity is F1 and laser power is P1, and in the processing condition 2, the feed velocity is F2 and laser power is P2, and if F1 < F <F2, the laser power P can be determined as follows.

$$P = \frac{P2 - P1}{F2 - F1} F + \frac{P1F2 - P2F1}{F2 - F1}$$

Other processing condition, such as frequency and duty ratio, can be calculated in the same manner to obtain an optimal laser processing conditions corresponding to the actual feed velocity to thereby achieve good processing.

When an optimal laser power corresponding to a corner angle is to be determined, CNC 10 determines in which range of corner angle preset in n stages the detected or calculated corner angle is included, and selects an optimal laser power corresponding to the corner angle.

In a corner section to be processed, a low laser power is obtained so that application of excessively large energy, to the target object to be processed, can be effectively prevented and melting does not occur at the portion irradiated with laser beam. Thus, it is possible to obtain good processing quality at the corner section. When a corner section having small corner angle and small radius of curvature is to be processed, repeated processing of the corner section with laser beam of low power is effective.

The signal output section 35 is means for outputting a registered number of the laser power for the corner angle of the corner section as an external signal. By repeated processing of a corner section having an acute corner angle with laser beam of low power corresponding to the registered number, good processing quality of the target corner section can be obtained.

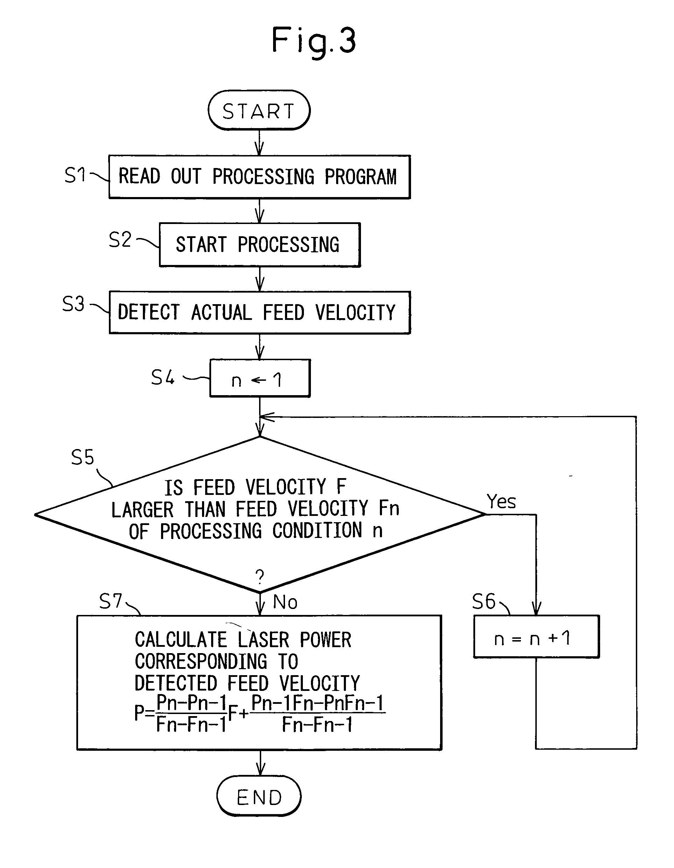

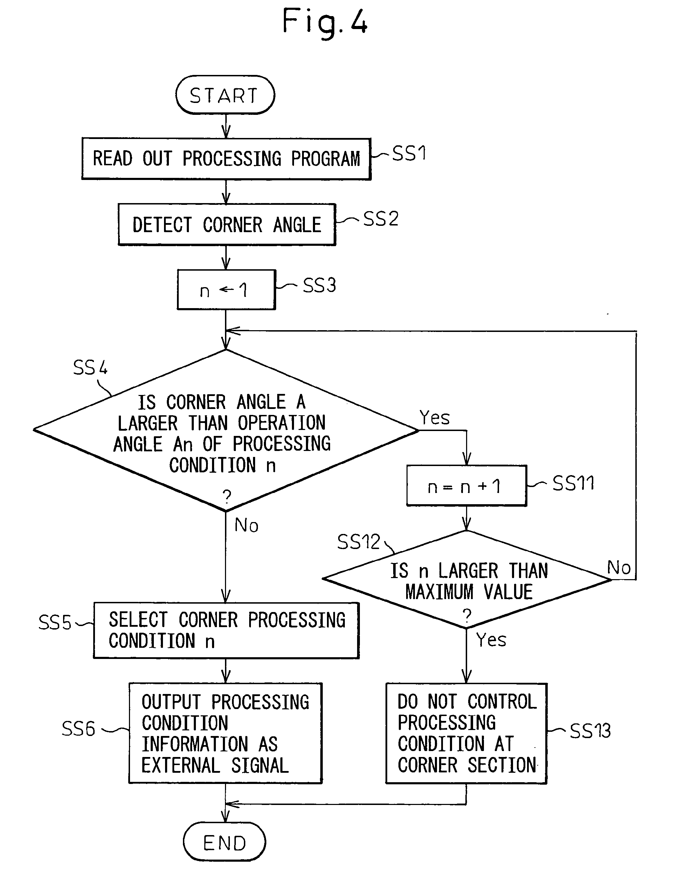

Next, a laser control method using the above described laser control apparatus 10 will be described with reference to Figs. 3 and 4, respectively. Fig. 3 is referenced mainly for explaining the determination of laser power corresponding to the detected actual feed velocity in a straight path portion (by means of feed velocity control), and Fig. 4 is referenced for explaining the determination of laser power corresponding to the corner angle in a corner section in curved path portion (by means of corner angle control).

In Fig. 3, an example is shown for determination of laser power from the detected actual feed velocity using data of plural stages (n stages) of feed velocity in association with laser power registered in advance in the numerical control apparatus 10. Other processing condition such as frequency, duty ratio, etc., can be determined in the same manner. First, at step S1, the processing program registered in CNC is read out. Next, at step S2, processing is started by execution of the processing program. At step S3, the actual feed velocity as compared to the instructed feed velocity of CNC is detected by the velocity detecting section 12. At step S4, the counter n is set to 1. At step S5, it is determined whether or not the actual feed velocity is greater than the feed velocity Fn in the n-th stage of the processing condition, and the operation program proceeds to step S6 if it is determined that the actual feed velocity is greater than Fn, and the operation program proceeds to step S7 if it is determined that the actual feed velocity is smaller than Fn. At step S6, 1 is added to the counter n. At step S7, laser power corresponding to the detected feed velocity is determined by a proportionality calculation using a linear approximation formula base on the feed velocities and corresponding laser power set at n-th and (n-1)-th stages of processing condition. The operation program for determination of laser power corresponding to the detected feed velocity is thereby terminated.

Fig. 4 shows an example of determination of laser power from the detected corner angle at the corner section using data of plural stages (n stages) of corner angles in association with laser power registered in CNC in advance. At step SS1, a processing program registered in CNC 10 is read out. At step SS2, the corner angle formed by two processing paths is calculated (detected) by the corner angle calculating section. At step SS3, the counter n is set to 1. At step SS4, the magnitude of detected corner angle A of the corner section is compared with the magnitude of the corner angle An of the n-th stage of processing conditions registered in the data storage region in CNC 10, and if A > An, the operation program proceeds to step S11, and if A < An, the operation program proceeds to step SS5. At step SS5, processing of the corner section is performed with laser power at n-th stage of the processing conditions. At step SS6, the information (a registered number) that the n-th stage of the processing conditions has been selected is outputted as an external signal, and the operation program is terminated. By outputting the information regarding the processing condition as an external signal, the processing condition can be used for repeated processing of the corner section having an acute corner angle, thus permitting improved processing quality to be achieved.

On the other hand, when the operation program proceeds to step SS11, 1 is added to the counter n. At step SS12, it is determined whether or not the counter n is greater than predetermined maximum value. If the counter n is greater than the maximum value, the operation program proceeds to step SS13, and if the counter n is not greater than the maximum value, the operation program proceeds to step SS4 to repeat the loop. At step SS13, if the detected corner angle is greater than the maximum angle set as corner angle of the processing condition n, the target corner section is not regarded as decelerating path portion of laser beam, so that alteration of laser power by means of the corner angle control or the feed velocity control at the target corner section is not conducted.

As has been described above, according to the laser control apparatus and the laser control method of the present embodiment, the laser power can be altered in accordance with change of feed velocity of laser beam or change of corner angle during laser processing, so that increase of energy absorbed by the target object to be processed in accelerated or decelerated path portion or curved path portion including corner section, which may cause melting or defective cut surface, can be avoided and processing quality can be improved.

The present invention is by no means limited to above-described embodiments, but can be implemented in various modification without departing from the concept of the invention. For example, although, in the present embodiment, the corner angle control and the feed velocity control are performed to determine an optimal laser power, it is also possible to arrange that only one of the corner angle control and the feed velocity control is performed.

**Claims**

1. A laser control method for controlling a laser beam irradiated, onto a target object (21) to be processed, during execution of a laser processing program, **characterized in that** the method comprises:

   providing a processing condition table describing a plurality of different feed velocities, in association with a processing condition of the laser beam corresponding to individual feed velocities;

detecting an actual feed velocity of the laser beam that is relative processing velocity of the laser beam relative to the target object (21) while processing is performed along a processing path instructed by the laser processing program; and

determining the processing condition of the laser beam corresponding to the actual feed velocity based on the processing condition table.

2. A laser control apparatus for controlling a laser beam irradiated, onto a target object (21) to be processed, during execution of a laser processing program, **characterized in that** the apparatus comprises:

a processing condition storage section (33) that stores previously a first processing condition table describing a plurality of different feed velocities, in association with a processing condition of the laser beam corresponding to individual feed velocities;

a velocity detecting section (31) for detecting an actual feed velocity which is relative processing velocity of the laser beam relative to the target object (21) while a processing is performed along a processing path instructed by the laser processing program; and

a processing condition calculating section (34) that determines the processing condition of the laser beam corresponding to the actual feed velocity detected by the velocity detecting section (31) based on the first processing condition table.

3. A laser control apparatus according to claim 2, **characterized in that** the apparatus further comprises a corner angle calculating section (32) which automatically detects a corner section included in the processing path and calculates a corner angle of the corner section,

wherein the processing condition storage section (33) stores further previously a second processing condition table describing a plurality of different corner angles in association with the processing condition of the laser beam corresponding to individual corner angles; and

the processing condition calculating section (34) determines the processing condition of the laser beam corresponding to the corner angle calculated by the corner angle calculating section (34) based on the second processing condition table.

4. A laser control apparatus according to claim 3, further comprising a signal output section (35) for outputting a registered number of the processing condition of the laser beam determined by the processing condition calculating section (34) as an external signal.

5. A laser control apparatus for controlling a laser beam irradiated, onto a target object to be processed, during execution of a laser processing program, **characterized in that** the apparatus comprises:

a processing condition storage section (33) that stores previously a processing condition table describing a plurality of different corner angles, in association with a processing condition of the laser beam corresponding to individual corner angles;

a corner angle calculating section (32) which, while a processing is performed along a processing path instructed by the laser processing program, automatically detects a corner section included in the processing path and calculates a corner angle; and

a processing condition calculating section (34) that determines the processing condition of the laser beam corresponding to the corner angle calculated by the corner angle calculating section (32) based on the processing condition table.

6. A laser control apparatus according to claim 5, further comprising a signal output section (35) for outputting a registered number of the processing condition of the laser beam determined by the processing condition calculating section (34) as an external signal.

# Fig.1

Fig.2

17 — DISPLAY     KEYBOARD — 18     10

| READ OUT PROCESSING PROGRAM | PATH ANALYZING SECTION | VELOCITY DETECTING SECTION |
|---|---|---|

SIGNAL OUTPUT SECTION — 35

30     31

POSITION CONTROL INSTRUCTION

CORNER ANGLE CALCULATING SECTION — 32

PROCESSING CONDITION STORAGE SECTION

PROCESSING CONDITION CALCULATING SECTION

34

LASER OUTPUT INSTRUCTION

33

LASER OSCILLATOR

SERVO AMPLIFIER

20     19

22

21     23

# Fig.3

START

S1 — READ OUT PROCESSING PROGRAM

S2 — START PROCESSING

S3 — DETECT ACTUAL FEED VELOCITY

S4 — $n \leftarrow 1$

S5

IS FEED VELOCITY F
LARGER THAN FEED VELOCITY Fn
OF PROCESSING CONDITION n
?

Yes

S6 — $n = n + 1$

No

S7

CALCULATE LASER POWER
CORRESPONDING TO
DETECTED FEED VELOCITY

$$P = \frac{Pn - Pn-1}{Fn - Fn-1} F + \frac{Pn-1 Fn - Pn Fn-1}{Fn - Fn-1}$$

END

# Fig.4

```
                    ┌─────────┐
                    │  START  │
                    └─────────┘
                         │
                         ▼
          ┌──────────────────────────────┐
          │ READ OUT PROCESSING PROGRAM   │──── SS1
          └──────────────────────────────┘
                         │
                         ▼
            ┌─────────────────────────┐
            │   DETECT CORNER ANGLE    │──── SS2
            └─────────────────────────┘
                         │
                         ▼
                  ┌─────────────┐
                  │   n ← 1     │──── SS3
                  └─────────────┘
                         │
```

SS4 — IS CORNER ANGLE A LARGER THAN OPERATION ANGLE An OF PROCESSING CONDITION n ? — Yes

No

n = n + 1 — SS11

SS12 — IS n LARGER THAN MAXIMUM VALUE ? — No

Yes

SS5 — SELECT CORNER PROCESSING CONDITION n

SS6 — OUTPUT PROCESSING CONDITION INFORMATION AS EXTERNAL SIGNAL

DO NOT CONTROL PROCESSING CONDITION AT CORNER SECTION — SS13

```
                    ┌─────────┐
                    │   END   │
                    └─────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006026107 A

- JP 6047571 A